# EUROPÄISCHE PATENTSCHRIFT

(11) **EP 1 880 174 B1**
(45) Veröffentlichungstag und Bekanntmachung des Hinweises auf die Patenterteilung: **21.09.2016**
(21) Anmeldenummer: 06777208.7
(22) Anmeldetag: 27.04.2006
(51) Int. Cl.: G01F 23/284, H01Q 13/02

(54) **VORRICHTUNG ZUR ERMITTLUNG UND ÜBERWACHUNG DES FÜLLSTANDES EINES MEDIUMS IN EINEM BEHÄLTER**
DEVICE FOR DETERMINING AND MONITORING THE LEVEL OF A MEDIUM IN A CONTAINER
DISPOSITIF PERMETTANT DE DETERMINER ET DE SURVEILLER LE NIVEAU D'UN MILIEU CONTENU DANS UN RECIPIENT

(30) Priorität: 11.05.2005 DE 102005022493
(43) Veröffentlichungstag der Anmeldung: 23.01.2008
(73) Patentinhaber: Endress+Hauser GmbH+Co. KG, 79689 Maulburg (DE)
(72) Erfinder: BERGMANN, Eric, 79585 Steinen (DE); CHEN, Qi, 79689 Maulburg (DE); FEISST, Klaus, 79199 Kirchzarten (DE)
(74) Vertreter: Andres, Angelika Maria
(86) Internationale Anmeldenummer: PCT/EP2006/061896
(87) Internationale Veröffentlichungsnummer: WO 2006/120124

(56) Entgegenhaltungen:
- DE-U1- 9 312 251
- US-A- 5 279 156
- US-A1- 2002 126 061

## Beschreibung

Die Erfindung betrifft eine Vorrichtung zur Ermittlung und Überwachung des Füllstandes eines Mediums in einem Behälter mittels einer Laufzeitmessmethode von hochfrequenten Messsignalen mit einer Hornantenne mit einem Wellenleiterbereich und einem aufgeweiteten Hornbereich, deren Hohlraum zumindest teilweise mit einem dielektrischen Füllkörper ausgefüllt ist.

Derartige Hornantennen sind beispielsweise in Mikrowellenmessgeräten der Prozess- und Automationsmesstechnik zu finden. Diese Messgeräte werden häufig in der Automations- und Prozesssteuerungstechnik eingesetzt, um die Prozessvariable 'Füllstand' in einem Behälter zu ermitteln. Von der Anmelderin werden beispielsweise Messgeräte unter dem Namen Micropilot produziert und vertrieben, welche nach dem Laufzeit-Messverfahren arbeiten und dazu dienen, einen Füllstand eines Mediums in einem Behälter zu bestimmen und/oder zu überwachen. Bei der Laufzeit-Messmethode werden beispielsweise Hochfrequenzimpulse bzw. Radarwellenimpulse über eine Antenne ausgesendet, und die an der Mediumsoberfläche reflektierten Echowellen werden nach der abstandsabhängigen Laufzeit des Signals wieder empfangen. Aus der Zeitdifferenz zwischen dem Aussenden des Hochfrequenzimpulses und dem Empfang des reflektierten Echosignals lässt sich der Füllstand ermitteln. Das so genannte FMCW-Verfahren (Frequency Modulated Continuous Waves) ist in diesem Zusammenhang mit dem obigen Messprinzip der Füllstandsmessung und der obigen Vorrichtung ebenfalls ausführbar.

Mit mikrowellendurchlässigem, dielektrischem Material gefüllte Hornantennen zur Verbesserung der Beständigkeit der Hornantenne gegen hochfrequenztechnische, thermische und chemische Einflüsse des Mediums sind bereits aus mehreren Patentschriften bekannt. Allerdings wird in keinem Fall irgendeine Maßnahme erwähnt, die der unvermeidlich starken thermischen Ausdehnung des Füllkörpers entgegenwirkt, um somit die daraus resultierenden Konsequenzen für die Dichtigkeit, die mechanische Stabilität und die HF-Performance der mit dielektrischem Material gefüllten Hornantenne zu vermeiden.

In der DE 100 40 943 A1 wird eine Hornantenne zur Füllstandsmessung vorgestellt, die zumindest teilweise mit einem dielektrischen Material gefüllt ist.

In der DE 10057 441 A1 wird eine Hornantenne für ein Radar-Gerät aufgezeigt, dessen Antennenhohlraum zumindest teilweise mit einer Füllung gefüllt ist und/oder die gesamte Hornantenne von der Füllung eingebettet ist. Desweiteren ist die Füllung prozessseitig so ausgestaltet, dass diese eine Flanschplattierung als Dichtelement ausbildet.

In der WO 03/078936 A1 wird die Abdichtung zwischen dem Füllkörper und der Hornantenne durch ein zusätzliches Dichtelement, z.B. ein O-Ring, und die Halterung des Füllkörpers in der Hornantenne durch ein Halteelement, z.B. eine Überwurfmutter, die beide im Bereich der Abstrahlungsapertur bzw. der größten Hornöffnung der Hornantenne angebracht sind, aufgezeigt.

Wie schon zuvor erwähnt, ist in keiner der oben genannten Schriften das Problem der Füllmaterialausdehnung oder einer dieser entgegenwirkenden Maßnahme diskutiert. Mikrowellendurchlässige Materialien, die außerdem noch druckstabil und chemisch beständig sind, haben erfahrungsgemäß das Problem, dass bei einem Anstieg der Umgebungstemperatur sich das Material stark ausdehnt. Diese unvermeidliche starke thermische Ausdehnung des Füllkörpers, bewirkt durch den großen Ausdehnungskoeffizienten dieser Materialien, erzeugt in dem Füllkörpermaterial innere mechanische Spannungen, die zu einer Verformung des Füllkörpers und bis hin zu einem Bersten der Füllkörperform führen kann. Da der Füllkörper durch die Ausmaße der metallischen Hornantenne nahezu allseitig begrenzt wird und sich das thermisch ausdehnende, dielektrische Material des Füllkörpers nur in Abstrahlrichtung der Hornantenne ausdehnen kann, treten im Material und besonders an Kanten starke mechanische Spannungen auf. Bei ständigem Temperaturwechsel sind aus diesem Grund auch Ermüdungserscheinungen, wie z.B. Ermüdungsbrüche, des Füllkörpermaterials oder angrenzender Materialbereiche zu beobachten. Nach heutigem Stand der Technik wird von der Anmelderin der Füllkörper aus unterschiedlichen Materialien in bestimmten Bereichen hergestellt, die alle einen unterschiedlichen Ausdehnungskoeffizienten haben. Prozessseitig besteht der Füllkörper meist aus einer dünnen Schicht eines mikrowellendurchlässigen, chemisch resistenten Materials mit einem hohen Ausdehnungskoeffizienten, dem ein Füllkörperbereich mit einem Material mit einer geringen thermischen Ausdehnung, z.B. Rohacell, mit Glashohlkugeln oder mit weiteren temperaturkompensierten Füllstoffe, angefügt ist. Die Materialien, deren thermische Ausdehnung durch Einbringen verschiedener Stoffkomponenten und Stoffeigenschaften kompensiert sind, haben den Nachteil, dass diese sehr teuer sind und ferner an den Materialübergängen ein Anteil der ausgesendeten Mikrowellen zurückreflektiert und gedämpft wird. Nachteilig bei solchen mehrbereichigen Füllkörpern aus unterschiedlichen Materialien sind auch die aufwändige Herstellung aufgrund der verschiedenen Herstellungsprozesse der einzelnen Füllkörperbereiche und die damit verbundenen hohen Herstellungskosten.

US 2002/0126061 A1 offenbart eine Vorrichtung zur Ermittlung und Überwachung des Füllstandes eines Mediums in einem Behälter mittels einer Laufzeitmessmethode von hochfrequenten Messsignalen mit einer Hornantenne aus einem Wellenleiterbereich und einem aufgeweiteten Hornbereich, deren Hohlraum zumindest teilweise mit einem dielektrischen Füllkörper ausgefüllt ist, wobei im aufgeweiteten Hornbereich zwischen der Innenfläche der Hornantenne und der Aussenfläche des dielektrischen Füllkörpers ein definierter Abstand zur Kompensation der unterschiedlichen thermischen Ausdehnung des Füllkörpers und der Hornantenne ausgebildet ist.

Aufgabe der Erfindung ist es, eine einfache, temperaturstabile, mit einem dielektrischen Material gefüllte Hornantenne aufzuzeigen.

Diese Aufgabe wird nach der Erfindung dadurch gelöst, dass im aufgeweiteten Hornbereich zwischen einer Innenfläche der Hornantenne und der Außenfläche des dielektrischen Füllkörpers ein definierter Abstand ausgebildet ist. Durch diesen Abstand zwischen der Außenfläche des Füllkörpers und der Innenfläche der Hornantenne kann die veränderliche thermische Ausdehnung des dielektrischen Materials des Füllkörpers und die inneren mechanischen Spannungen im Material kompensiert werden, da sich dieser Abstand je nach Umgebungstemperatur aufgrund der thermischen Ausdehnung des Füllkörpers ändert. Bei einer maximalen für diese Antennenversion vorgegebenen Temperatur liegt der Füllkörper nahezu an der Innenfläche der Hornantenne an und bei der niedrigsten zulässigen Temperatur hat der Füllkörper einen maximalen Abstand zur Hornantenne. Der Abstand ist so bemessen, dass noch keine negativen Auswirkungen auf die HF-Performance der Hornantenne und Messeigenschaften auftreten.

In einer besonders bevorzugten Ausführungsform der Erfindung ist vorgesehen, dass durch den definierten Abstand ein Spalt zwischen der Innenfläche der Hornantenne und der Außenfläche des dielektrischen Füllkörpers von näherungsweise 0,2 - 2 mm ausgebildet ist. Ein mit Luft gefüllter Spalt mit einer Spaltbreite zwischen 0,2 - 2 mm ist vorteilhaft, da dieser geringe Spaltbreitenbereich keinen Einfluss auf die HF-Performance der Antenne hat.

Gemäß einer vorteilhaften Ausführungsform der erfindungsgemäßen Lösung wird vorgeschlagen, dass der definierte Abstand zwischen der Innenfläche der Hornantenne und der Außenfläche des dielektrischen Füllkörpers stetig ausgebildet ist. Der Spalt zwischen der Innenfläche der Hornantenne und der Außenfläche des Füllkörpers ist immer mit dem gleichen Abstandswert ausgebildet, so dass nahezu überall an der Innenfläche der Hornantenne die gleichen Reflexionseigenschaften bestehen.

Eine zweckmäßige Ausgestaltung der erfindungsgemäßen Vorrichtung besteht darin, dass der definierte Abstand periodisch oder beliebig unterbrochen ist, so dass zumindest ein Steg oder zumindest eine Oberflächenstruktur auf der Außenfläche des Füllkörpers und/oder auf der Innenfläche der Hornantenne aneinander angrenzend oder zueinander beabstandet ausgebildet ist. Durch die angrenzende oder beabstandete Ausbildung von Stegen oder Oberflächenstrukturen, z.B. Waben, Kreise, Kegelstümpfe und/oder Pyramiden, auf der Außenfläche des Füllkörpers und/oder der Innenfläche der Hornantenne wird die mechanische Stabilität des Füllkörpers in der Hornantenne erhöht. Außerdem ist dadurch eine genauere Positionierung des Füllkörpers zu einer Mittelachse der Hornantenne möglich. Die Hohlräume zwischen diesen Stegen und Oberflächenstrukturen sind so berechnet und ausgestaltet, dass die thermische Ausdehnung des dielektrischen Materials des Füllkörpers nahezu ungehindert ausführbar ist.

Gemäß der Erfindung wird vorgeschlagen, dass der Füllkörper zur Abstützung und Kompensation der Prozessdruckkräfte auf den Füllkörper und/oder die Hornantenne prozessseitig auf einer bestimmten Länge an der Hornantenne anliegt.

In einer besonders bevorzugten Ausführungsform der Erfindung ist vorgesehen, dass in dem definierten Abstand zwischen der Innenfläche der Hornantenne und der Außenfläche des dielektrischen Füllkörpers eine das hochfrequente Messsignal absorbierende Dämpfungsfolie vorgesehen ist. Aufgrund des Einbaus einer Dämpfungsfolie im definierten Abstand zwischen der Innenfläche der Hornantenne und der Außenfläche des dielektrischen Füllkörpers werden Störreflektionen des hochfrequenten Messsignals im Nahbereich, wie z.B. Klingeln aufgrund von Mehrfachreflexionen mit einem Füllkörper gefüllten Teil der Hornantenne, vermindert. Diese Störreflexionen entstehen jedoch nicht im für die Kompensation der thermische Ausdehnung des Füllkörpers vorgesehenen Spalt, sondern allgemein an den Grenzflächen des Füllkörpers. Die Störreflexionen sind auch bei den aus unterschiedlichen Materialien, mehrteilig aufgebauten Füllkörpern des gezeigten Stands der Technik vorhanden, werden jedoch im Gegensatz zu den in der Erfindung verwendeten Kunststoffen, wie Polytetrafluorethylen (PTFE), durch die Verwendung eines stark dämpfendes Füllmaterial, wie z.B. Eccolite oder Rohacell, unterdrückt.

Gemäß der Erfindung ist vorgesehen, dass zumindest ein Dichtelement und/oder zumindest ein Arretierungselement zwischen dem Füllkörper und der Hornantenne eingebracht ist, die eine Dichtfunktion und eine gleichzeitige Arretierungsfunktion des Füllkörpers in der Hornantenne ausbildet.

Gemäß der Erfindung ist weiterhin vorgesehen, dass das Dichtelement und/oder das Arretierungselement im Wellenleiterbereich zwischen der Hornantenne und dem Füllkörper ausgestaltet ist/sind. Die bestmöglichsten Dichteigenschaften des Dichtelements werden erreicht, wenn die Anordnung des Dichtelements im Wellenleiterbereich erfolgt, der die kleinste zu dichtende Fläche aufweist und wenig von der hohen erreichbaren Prozesstemperatur im Prozessraum oder infolgedessen von den auftretenden Temperaturwechsel erfährt.

Eine besonders vorteilhafte Weiterbildung der erfindungsgemäßen Lösung schlägt vor, dass eine scheibenförmige Verbreiterung auf der dem Prozessraum zugewandten Seite des Füllkörpers als Prozessdichtungselement ausgebildet ist. Durch eine Flanschplattierung, die durch eine scheibenförmige Verbreiterung des Füllkörpers in diesem Bereich der Abstrahlungsapertur der Hornantenne ausgebildet ist, kann auf ein zusätzliches Dichtelement in diesem Bereich verzichtet werden. Diese Flanschplattierung aus dem Material des Füllkörpers wird zwischen den beiden Rändern von zwei Flanschstutzen durch eine radial angeordnete Verschraubung oder über einen Triclamp-Schließmechanismus dichtend eingeklemmt.

Gemäß einer dienlichen Ausgestaltung der erfindungsgemäßen Vorrichtung wird vorgeschlagen, dass der Formenübergang des Füllkörpers von dem aufgeweiteten Hornbereich auf die scheibenförmige Verbreiterung kontinuierlich abgerundet ausgestaltet ist, um eine Kerbwirkung des Füllkörpers im Bereich des Formenübergangs zu vermeiden. Der Formenübergang von dem Hornbereich auf die scheibenförmige Verbreiterung darf nicht abrupt oder als Kante erfolgen, da bei einer thermischen Ausdehnung des Füllkörpers an dieser Kannte die größten Spannungen auftreten und somit dort das größte Risiko einer Einkerbung bzw. eines Ermüdens des Materials besteht. Deshalb ist diese den Füllkörper umlaufende Kante abgerundet, z.B. halbreisförmig oder elliptisch, ausgeführt.

Eine geeignete Ausgestaltung der erfindungsgemäßen Vorrichtung besteht darin, dass der Füllkörper und/oder die Hornantenne mehrteilig ausgestaltet sind/ist und/oder diese jeweils aus mehreren unterschiedlichen Materialien ausgebildet ist/sind.

In einer vorteilhaften Ausführungsform der Erfindung ist vorgesehen, dass der Füllkörper in Abstrahlrichtung eine konvexe, konkave oder kegelförmige Formgebung oder eine Fresnel-Linsenform aufweist. Durch die Ausgestaltung der oben aufgeführten, Mikrowellen bündelnden Elemente an der dem Prozessraum zugewandten Seite des Füllkörpers können Phasengangunterschiede, die im Hornbereich der Hornantenne entstehen können, kompensiert werden, so dass eine gewünschte Abstrahlcharakteristik, z.B. eine ebene Wellenfront, des Messsignals abgestrahlt und empfangen wird.

Angesichts der zuvor aufgeführten Merkmale erfüllt diese Erfindung die folgenden Vorteile und Eigenschaften, dass eine kostengünstige, temperaturstabile und druckbeständige, sowie mediumsresistente Hornantenne mit guter HF-Performance für Füllstandsmessgeräte erzeugt wird.

Weitere Vorteile der Erfindung sind, dass durch die Ausbildung eines Spalts zwischen der metallischen Hornantenne und dem dielektrischen Füllkörper die bei höherer Einsatztemperatur auftretende unterschiedliche thermische Ausdehnung des Füllkörpers und der Hornantenne kompensiert werden und die beim Stand der Technik damit verbundenen erheblichen mechanischen Spannungen im Füllkörper vermieden werden, wodurch auch Auswirkungen auf die Dichtigkeit und HF-Performance aufgrund der Ausdehnung des Füllkörpers verbessert werden. Außerdem werden die aus diesem Grunde beim Stand der Technik auftretenden starken Einschränkungen in der Auswahl geeigneter Materialien aufgehoben. Insbesondere wird es durch die Erfindung möglich, sehr temperaturstabile und mikrowellendurchlässige Kunststoffe, die jedoch einen hohen Wärmeausdehnungskoeffizienten besitzen, wie beispielsweise PTFE oder PFA, einzusetzen.

Die Erfindung und ausgewählte Ausführungsbeispiele werden anhand der nachfolgenden Zeichnungen näher erläutert. Zur Vereinfachung sind in den Zeichnungen identische Teile mit dem gleichen Bezugszeichen versehen worden. Es zeigt:
Fig. 1 : eine schematische Gesamtdarstellung einer auf einen Behälter montierten Vorrichtung zur Ermittlung und Überwachung des Füllstandes eines Mediums in einem Behälter mittels einer erfindungsgemäßen Hornantenne,
Fig. 2 : eine schematische Darstellung eines ersten Ausführungsbeispiels der erfindungsgemäßen Hornantenne,
Fig. 3 : eine schematische Darstellung eines zweiten Ausführungsbeispiels der erfindungsgemäßen Hornantenne,
Fig. 4 : einen vergrößerter Teilausschnitt A der Fig. 1 des ersten Ausführungsbeispiels der erfindungsgemäßen Hornantenne, und
Fig. 5 : einen vergrößerter Teilausschnitt B der Fig. 1 des ersten Ausführungsbeispiels der erfindungsgemäßen Hornantenne.

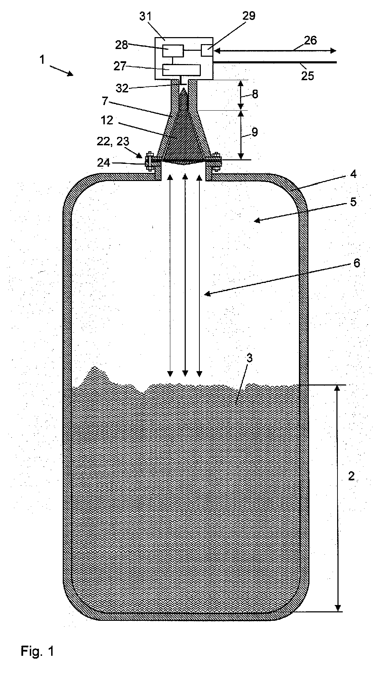

In Fig. 1 wird ein Anwendungsbeispiel der erfmdungsgemäßen Hornantenne 7 in einem Prozessmesssystem dargestellt. Die Vorrichtung 1 bzw. das Messgerät in der Fig. 1, das über einen Flansch 24 auf einen Behälter 4 montiert ist, ermittelt beispielsweise nach der Laufzeit-Messmethode den Füllstand 2 eines Mediums 3 bzw. eines Füllguts in dem Behälter 4. Die erfindungsgemäße Hornantenne 7 lässt sich in zwei Bereiche aufteilen: den Wellenleiterbereich 8 und den aufgeweiteten Hornbereich 9.

Die Vorrichtung bzw. das Messgerät 1 beinhaltet eine Sende-/Empfangseinheit 27, in der die Messsignale 6 erzeugt werden und durch ein Einkoppelelement 32 im Wellenleiterbereich 8 der Hornantenne 7 abgestrahlt werden. Die in die Hornantenne 7 eingekoppelten Messsignale 6 werden durch das Material des Füllkörpers 12 hindurch von der Hornantenne 7 in den Messraum 5 mit einer vorbestimmten Abstrahlcharakteristik abgestrahlt. Meist wird eine Abstrahlcharakteristik der Messsignale 6 mit einer ebenen Wellenfront angestrebt. Die in den Messraum 5 ausgesendeten Messsignale 6 werden an einer beliebigen Oberfläche im Behälter 4 oder an einer Oberfläche des Mediums 3 reflektiert und nach einer bestimmten Laufzeit wieder von der Sende-/Empfangseinheit 27 empfangen. Über die Laufzeit der Messsignale 6 wird der Füllstand 2 des Mediums 3 im Behälter 4 bestimmt.

Die Regel-/Auswerteeinheit 28 hat die Aufgabe, das empfangene, reflektierte Echo der Messsignale 6 auszuwerten, indem das Messsignal 6 durch eine Signalverarbeitung und spezielle Signalauswertungsalgorithmen weiter verarbeitet wird und daraus die Laufzeit bzw. der Füllstand 2 bestimmt wird.

Über die Versorgungsleitung 25 kann das Messgerät 1 mit der benötigten Energie versorgt werden. Die Regel-/Auswerteeinheit 28 kommuniziert über einen Buskoppler 29 und den Feldbus 25 mit einer entfernten Kontrollstelle und/oder mit weiteren Messgeräten 1, die nicht explizit gezeigt sind. Eine zusätzliche Versorgungsleitung 25 zur Energieversorgung des Messgerätes 1 entfällt, wenn es sich bei dem Messgerät 1 um ein so genanntes Zweileiter-Messgerät handelt, dessen Kommunikation und Energieversorgung über den Feldbus 26 ausschließlich und gleichzeitig über eine Zweidrahtleitung stattfindet. Die Datenübertragung bzw. Kommunikation über den Feldbus 26 erfolgt beispielsweise nach dem CAN-, HART-, PROFIBUS DP-, PROFIBUS FMS-, PROFIBUS PA-, oder FOUNDATION FIELDBUS- Standard.

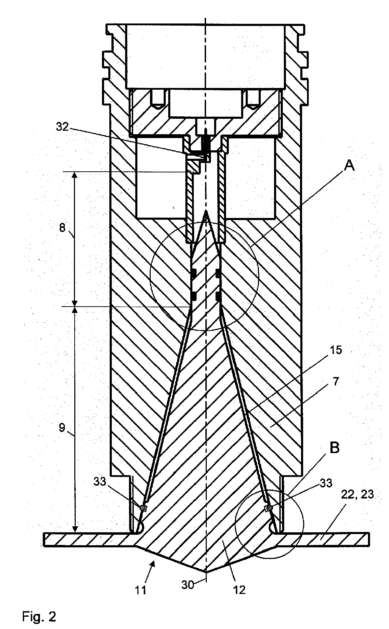

In Fig. 2 ist die erfindungsgemäße Hornantenne 7 bzw. hornförmige Antenne aus einem elektrisch leitfähigen Material, die innen zumindest teilweise mit einem Füllkörper 12 aus einem dielektrischen Material ausgefüllt ist, gezeigt. Die Hornantenne 7 besteht beispielsweise aus einem Metall, Edelstahl oder leitfähigem Kunststoff und der Füllkörper 12 ist aus dem dielektrischen Material insbesondere aus Polytetrafluorethylen (PTFE) oder Perfluoralkoxy-Copolymer (PFA) hergestellt. Die Kunststoffe Polytetrafluorethylen oder Perfluoralkoxy-Copolymer haben gute chemische und physikalische Stoffeigenschaften, die dieses Material für diese Anwendung prädestinieren, z.B. Beständigkeit gegen nahezu alle Chemikalien, sehr hohe Temperaturfestigkeit, gute Mikrowellendurchlässigkeit und gute HF-Performance. Vorteilhafterweise ist der dielektrische Füllkörper 12 aus Kostengründen und aus Herstellungsgründen aus einem Stück gefertigt, jedoch ist auch eine mehrteilig und/oder aus unterschiedlichen Materialien gefertigte Ausgestaltung des Füllkörpers 12 denkbar. Die Herstellung des Füllkörpers 12 wird meist durch Drehen, Spritzguss oder isostatisches Pressen des dielektrischen Materials bzw. Kunststoffes bewerkstelligt.

Um einen reflexionsarmen, wellenwiderstandsangepassten Übergang zwischen Füllkörper 12 und anschließendem Messraum 5 zu gewährleisten, ist die dem Messraum 5 zugewandte Seite des Füllkörpers 12 in Form eines stumpfen Kegels ausgebildet. Dadurch werden Phasenunterschiede zwischen einzelnen Wellenbereichen ausgeglichen, die beim Durchlaufen der Horngeometrie entstehen, und es wird eine ebene Welle abgestrahlt. Es sind jedoch auch plane, konvexe, oder konkave Übergangsgeometrien zur Ausbildung der gewünschten Abstrahlcharakteristik denkbar.

Das Messsignal 6 wird wie in Fig. 1 beschrieben über ein Einkoppelelement 32 in dem Wellenleiterbereich 8, der als Hohleiter bzw. Rund- oder Recht-eckhohlleiter ausgebildet ist, ausgesendet. Bevorzugt wird der Hohlleiter bzw. der Wellenleiterbereich 8 so ausgestaltet, dass sich ein TE-Wellenmode ausbildet. In diesem Wellenleiterbereich 8 ist der Füllkörper 12 insbesondere als ein Anpasselement, z.B. Kegelspitze oder Stufenpyramide, ausgestaltet, um eine gute Anpassung vom Luft gefüllten Hohlleiter zu dem mit dielektrischen Material gefüllten Hohlleiter zu gewährleisten. Durch die Anpassung im Wellenleiterbereich 8 der Hornantenne 7 wird vermieden, dass schon in diesem Wellenleiterbereich 8 das eingespeiste Messsignal 6 anteilig zurückreflektiert und somit gedämpft wird. Der Wellenleiterbereich 8 der Hornantenne 7 kann auch vollständig von dem dielektrischen Material des Füllkörpers 12 ausgefüllt sein.

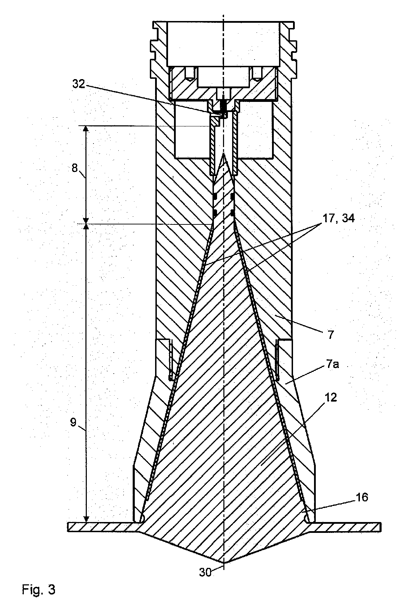

Bei dem Füllkörper 12 handelt es sich wie oben beschrieben um dielektrische Kunststoffe, z. B. PTFE oder PFA, die in der Regel einen im Vergleich zum umgebenden Material, z.B. Edelstahl, der Hornantenne 7 deutlich höheren Wärmeausdehnungskoeffizienten besitzen. Deshalb ist zwischen der Innenfläche 10 der Hornantenne 7 und der Außenfläche 13 des Füllkörpers 12 zumindest teilweise ein definierter Abstand 15 eingebaut. Hierdurch ist ein Spalt 14 ausgebildet, der beispielsweise eine Spaltbreite von typischerweise 0,2 - 2 mm hat. Aufgrund der geringen Spaltbreite wird das Messsignal 6 praktisch nicht beeinflusst, so dass negative Auswirkungen auf die Messperformance der gesamten Vorrichtung 1 nicht auftreten. Wird eine Spaltbreite größer als 2 mm gewählt, so kann sich dies jedoch negativ auf die Messperformance der Vorrichtung 1 auswirken, da sich in diesem Spalt 14 stehende Wellen des Messsignals 6 ausbilden. Durch eine leitfähige Beschichtung der Außenfläche 13 des Füllkörpers 12 im Hornbereich 9 und gegebenenfalls im Wellenleiterbereichs 8 mit einem hinreichenden elektrischen Kontakt zu der leitfähigen Hornantenne 7, hat auch eine Spaltbreite von mehr als 2 mm nahezu keine Auswirkungen auf die Messeigenschaften der Hornantenne 7 mehr. Die Ausgestaltung des Füllkörpers 12 mit einer leitfähigen Beschichtung ist nicht explizit in der Fig. 2 und Fig. 3 gezeigt. Des weiteren ist es möglich, durch den Einbau einer Dämpfungsfolie 34 an den Grenzflächen des Füllkörpers 12 auftretenden Störreflektionen und somit negative Auswirkungen auf die Messperformance zu verhindern. Hierzu wird eine den Umfang des Füllkörpers 12 im Bereich des Spalts 12 abbildende Dämpfungsfolie 34, z.B. auf Kunststoffbasis mit einem Füllmaterial aus Ferrit oder Kohlenstoff zumindest teilweise mit einem Klebefilm versehen und an der Innenfläche 10 der Hornantenne 7 und/oder an der Außenfläche 13 des dielektrischen Füllkörpers 12 fixiert. Eine alternative Befestigungsmethode ist, dass an der Stoßstelle der mikrowellen-absorbierenden Dämpfungsfolie 34 komplementär ausgebildete, ineinander greifende Verschlusselemente ausgestaltet sind, so dass die Stoßstellen der Dämpfungsfolie 34 lösbar miteinander verbindbar sind. Diese ineinander greifenden Stoßstellen werden im Bereich des Spalts 14 miteinander verbunden, so dass die mikrowellenabsorbierende Dämpfungsfolie 34 am Füllkörper 12 oder in dem entsprechenden Hornbereich 9 der Hornantenne 7 eng anliegt. Durch diese Ausgestaltung des Verschlusses der Stoßstellen der Dämpfungsfolie 34 ist eine einfache Montage im Spalt 14 möglich. Es ist zur Vereinfachung der Herstellung und der Montage auch möglich diese Dämpfungsfolie 34 im Spritzgussverfahren direkt in das Spritzformteil des Füllkörpers 12 zu integrieren, indem eine entsprechend geformte Dämpfungsfolie 34 in das Spritzwerkzeug eingelegt oder gleichzeitig bzw. zeitlich versetzt eingespritzt wird.

Der Spalt 14 kann stetig ausgebildet sein, wie in Fig. 2 gezeigt, oder durch eine Oberflächenstruktur 17 bzw. Stege 16 auf der Innenfläche 10 der Hornantenne 7 und/ oder auf der Außenfläche 13 des Füllkörpers 12 in dem aufgeweiteten Hornbereich 9 unterbrochen sein. Diese beispielsweise periodische Unterbrechung in Form von Zwischenstegen bzw. eines Rillenprofils kann in die Außenfläche 13 des Füllkörpers 12 eingearbeitet sein, so dass die Innenfläche 10 der Hornantenne 7 partiell an der Außenfläche 13 des Füllkörpers 12 im Hornbereich 9 anliegt und umgekehrt, wie in Fig. 3 gezeigt.

Sind die Stege 16 oder die Oberflächenstruktur 17 in der Innenfläche 10 der Hornantenne 7 ausgearbeitet oder in der leitfähigen Beschichtung des Füllkörpers 12 enthalten, so wird in der Fachliteratur von einer "corrugated horn antenna" gesprochen. Bei dieser Art von Hornantennen 7 sind diese Stege 16 oder die Oberflächenstruktur 17 dementsprechend ausgestaltet, dass dem Messsignal 6 eine festlegte Phasenverschiebung aufgeprägt wird, die so berechnet und ausgelegt ist, dass eine prädestinierte Abstrahlcharakteristik der Hornantenne 7, z.B. eine ebene Wellenfront, erzeugt wird. Diese Stege 16 oder die Oberflächenstruktur 17 können in die Innenfläche 10 der Hornantenne 7 bei der Herstellung des Wellenleiterbe-reichs 8 und des aufgeweiteten Hornbereichs 9 durch Herausdrehen auf einer Drehbank in einfacher Art und Weise erzeugt werden.

Es ist auch denkbar, dass in den Spalt 14 ein entsprechendes Strukturelement, z. B. eine Wabenstruktur oder separate Ringstruktur aus einem gegebenenfalls vom Füllkörper 12 abweichenden Material eingebracht ist, das diesen Spalt 14 zumindest teilweise ausfüllt und den Füllkörper 12 zur Mittelachse 30 der Hornantenne 7 zentriert positioniert. Auch dreidimensionale Strukturelemente, z.B. Federstrukturen in Wabenformat, können in den Spalt 14 eingebracht werden, so dass diese Federelemente den Füllkörper 12 in der Hornantenne 7 symmetrisch zur Mittelachse 30 positionieren und bei einer Beschichtung des Füllkörpers 12 mit einer leitfähigen Schicht diese elektrisch kontaktieren.

Der Spalt 14 kann auch vollständig von einem Material ausgefüllt sein, wenn dessen thermischer Ausdehnungskoeffizient ein anderes Vorzeichen und einen zuvor berechneten, kompensierenden Wert gegenüber dem thermischen Ausdehnungskoeffizienten des Materials des Füllkörpers 12 besitzt. Des weiteren können komprimierbare Schaumkunststoffe oder komprimierbare, viskose Gele und Flüssigkeiten in den Spalt 14 integriert sein.

Denkbar ist z.B. auch das gezielte Einbringen von mikrowellendämpfenden Materialien, um evtl. auftretende, störende Mehrfachreflexionen in der Horn-antenne zu vermeiden.

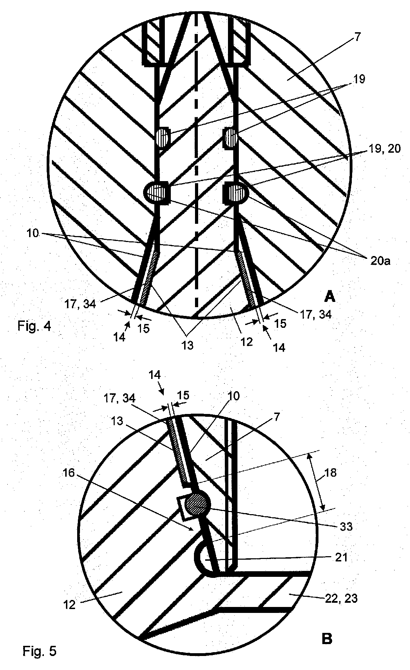

Im Teilausschnitt B der Fig. 1 und explizit in Fig. 5 ist gezeigt, dass die Außenfläche 13 des Füllkörpers 12 über eine bestimmte Länge 18 zur druckfesten Abstützung direkt an der Innenfläche 10 der Hornantenne 7 anliegt, wodurch bevorzugt ein 5 - 30 mm breiter, rundum laufender Steg 16 zur Stabilisierung der Position des Füllkörpers 12 zur Mittelachse 30 ausgebildet wird.

Im Teilausschnitt A der Fig. 1 und explizit in Fig. 4 ist gezeigt, dass der Füllkörper 12 im Wellenleiterbereich 8 ein oder mehrere Dichtelemente 19 aufweist, die auch als ein Arretierungselement 20 des Füllkörpers 12 in der Hornantenne 7 ausgestaltet sind. Ein Vorteil dieser Position der Dichtelemente 19 bzw. der Dichtgeometrie liegt darin, dass durch die räumliche Trennung vom Prozessraum 5 die Temperaturbelastung der Dichtelemente 19 deutlich reduziert und damit deren Lebensdauer erheblich verlängert wird.

Die Dichtelemente 19 können, wie in der WO 03/078936 gezeigt, auf der dem Prozessraum 5 zugewandten Seite zwischen dem Füllkörper 12 und der Hornantenne 7 oder dazwischen im aufgeweiteten Hornbereich 9 angeordnet sein. Gemäß der Erfindung vorgesehen wird jedoch die Position des kleinsten Durchmessers des Füllkörpers 12 im Wellenleiterbereich 9, da hier aufgrund der geringeren Dichtflächen und der niedrigeren Temperaturen die zu erwartenden Leckraten am geringsten sind.

Wie schon zuvor beschrieben können ein oder mehrere Dichtelemente 19 auch als Arretierungselemente 20 so ausgebildet sein, dass diese den Füllkörper 12 in seiner Position in der Hornantenne 7 fixieren und somit ein Herausfallen des Füllkörpers 12 verhindern. Diese Arretierung des Füllkörpers wird dadurch erreicht, dass im Wellenleiterbereich 8 in der Position des Arretierungselementes 20 an der Innenfläche 10 der Hornantenne 7 eine Ausnehmung 20a, z.B. umlaufende Nut mit einem Halbkreisprofil , ausgestaltet ist, in die das Dichtelement 19 bzw. Arretierungselement 20 eingreift. Als Dichtelement 19 bzw. Arretierungselement 20 kann dadurch ein handelsüblicher O-Ring in gegebenenfalls verschiedenen Größen verwendet werden.

Als ein alternatives oder ein zusätzliches Arretierungselement 20 ist der Einbau eines federnden Sicherungselement 33, z.B. ein Runddraht-, ein Flachdraht-, ein Seegerring, zur Sicherung des Füllkörpers 12, z.B. aus dem Werkstoff Polytetrafluorethylen (PTFE), gegen Herausfallen aus dem Hornbereich 9 der Hornantenne 7 vorgesehen. Wie im Teilausschnitt B der Fig. 1 und explizit in Fig. 5 gezeigt ist das Sicherungselement 33 beispielsweise als federnder Sicherungsring aus einem Federstahl so ausgebildet, dass durch dieses Sicherungselement 33 keine Störreflexionen im hochfrequenten Messsignal 6 erzeugt werden

Um einer Kerbwirkung bei Druckbelastung entgegenzuwirken, ist der Formenübergang 21 von dem Hornbereich 9 auf die scheibenförmige Verbreiterung 22 typischerweise verrundet. Die scheibenförmige Verbreiterung 22 des Füllkörpers 12 bildet somit eine Flanschplattierung 23 zwischen dem Geräte- und dem Prozessflansch 24 als ein primäres Prozessdichtelement 23. Durch scheibenförmige Verbreiterung 22 des dem Messraum 5 zugewandten Füllkörpers 12 erhält man ein zusätzliches Prozessdichtelement 23 bzw. eine weitere Dichtgeometrie, wobei die Dicke dieser Flanschplattierungsscheibe 23 bevorzugt 2-10 mm beträgt.

Das Dichtelement 19 und das Arretierungselement 20 sind, wie schon zuvor beschrieben, im Wellenleiterbereich 8 des Füllkörpers 12 insbesondere durch zwei O-Ringe realisiert worden. Diese Dichtelemente 19 sollen verhindern, dass infolge von Permeation, d.h. infolge eines Stofftransports in festen Materialien auf molekularer Ebene, insbesondere in dem Material des Prozessdichtelements bzw. der Flanschplattierung 23, in den Spalt 14 eingedrungenes Medium 3 in den Bereich des Einkoppelelements 31 und/oder der Messelektronik 31 gelangt.

Das Messsignal 6 bzw. das Mikrowellensignal kann nach Verlassen des dielektrischen Füllkörpers 12 entweder frei in Richtung des Mediums 3 abgestrahlt werden, oder durch einen nachfolgenden zylindrischen oder leicht aufweitenden Hohlleiter, so genannte Schwallrohre, noch eine beliebige Strecke geführt werden.

In Fig. 3 wird eine Hornantenne 7 gezeigt, bei der mittels eines Erweiterungselementes bzw. einer Hornerweiterung 7a die kleinere Variante der Hornantenne 7 auf eine größere Variante mit einer größeren Antennenapertur der Hornantenne 7 ausgebaut wird. Das Erweiterungselementes bzw. die Hornerweiterung 7a wird hierzu über ein Befestigungselement, z.B. eine Verschraubung, mit der kleineren Variante der Hornantenne 7 verbunden. Der Füllkörper 12 ist einteilig aus einem dielektrischen Material ausgeführt, es ist jedoch auch eine mehrteilige, adaptive Ausführungsform des Füllkörpers 12 möglich. Durch diesen modularen Aufbau des Körpers der Hornantenne 7 können Herstellungs- und Materialkosten eingespart werden, da die kleinere Variante der Hornantenne 7 in größeren Stückzahlen hergestellt werden kann und nur das Erweiterungselement 7a und ein eventueller größerer Füllkörper 12 speziell hergestellt werden müssen.

Der Spalt 14 zwischen der Außenfläche 13 des Füllkörpers 12 und der Innenfläche 10 der Hornantenne 7 ist durch eine Oberflächenstruktur 17 oder Stege 16 so ausgefüllt, dass dazwischen noch Hohlraumbereiche für die thermische Ausdehnung des Füllkörpers 12 vorhanden sind. Durch die Ausfüllung des Spalts mit Oberflächenstrukturen 17 oder Stegen 16 wird die Druckbelastbarkeit des Füllkörpers 12 durch den Prozessdruck im Prozessraum 5 verbessert.

### Bezugszeichenliste

1. Vorrichtung, Messgerät
2. Füllstand
3. Medium
4. Behälter
5. Messraum, Prozessraum
6. Messsignale
7. Hornantenne
7a. Erweiterungselement, Hornerweiterung
1. Wellenleiterbereich
2. Hornbereich
3. Innenfläche
4. Hohlraum
5. Füllkörper
6. Außenfläche
7. Spalt
8. Abstand
9. Steg
10. Oberflächenstruktur
11. Länge
12. Dichtelement
13. Arretierungselement
20a. Ausnehmung
1. Formenübergang
2. scheibenförmige Verbreiterung
3. Prozessdichtelement, Flanschplattierung
4. Flansch
5. Versorgungsleitung
6. Feldbus
7. Sende-/Empfangseinheit
8. Regel-/Auswerteeinheit
9. Buskoppler
10. Mittelachse
11. Messelektronik
12. Einkoppelelement
13. Sicherungselement
Dämpfungsfolie

## Patentansprüche

1. Vorrichtung (1) zur Ermittlung und Überwachung des Füllstandes (2) eines Mediums (3) in einem Behälter (4) mittels einer Laufzeitmessmethode von hochfrequenten Messsignalen (6) mit einer Hornantenne (7) aus einem Wellenleiterbereich (8) und einem aufgeweiteten Hornbereich (9), deren Hohlraum (11) zumindest teilweise mit einem dielektrischen Füllkörper (12) ausgefüllt ist,
wobei im aufgeweiteten Hornbereich (9) zwischen der Innenfläche (10) der Hornantenne (7) und der Außenfläche (13) des dielektrischen Füllkörpers (12) ein definierter Abstand (15) zur Kompensation der unterschiedlichen thermischen Ausdehnung des Füllkörpers (12) und der Hornantenne (7) ausgebildet ist,
**dadurch gekennzeichnet,**
**dass** der Füllkörper (12) zur Abstützung und Kompensation der Prozessdruckkräfte auf den Füllkörper (12) und/oder die Hornantenne (7) prozessseitig auf einer bestimmten Länge (18) an der Hornantenne (7) anliegt, wobei zumindest ein Dichtelement (19) und/oder zumindest ein Arretierungselement (20) zwischen dem Füllkörper (12) und der Hornantenne (7) eingebracht ist, das eine Dichtfunktion und eine gleichzeitige Arretierungsfunktion des Füllkörpers (12) in der Hornantenne (7) ausbildet, und wobei das Dichtelement (19) und/oder das Arretierungselement (20) im Wellenleiterbereich (8) zwischen der Hornantenne (7) und dem Füllkörper (12) ausgestaltet ist/sind.

2. Vorrichtung nach Anspruch 1,
**dadurch gekennzeichnet,**
**dass** durch den definierten Abstand (15) ein Spalt (14) zwischen der Innenfläche (10) der Hornantenne (7) und der Außenfläche (13) des dielektrischen Füllkörpers (12) von 0,2 - 2 mm ausgebildet ist.

3. Vorrichtung nach Anspruch 1 oder 2,
**dadurch gekennzeichnet,**
**dass** der definierte Abstand (15) zwischen der Innenfläche (10) der Hornantenne (7) und der Außenfläche (13) des dielektrischen Füllkörpers (12) stetig ausgebildet ist.

4. Vorrichtung nach Anspruch 1 oder 2,
**dadurch gekennzeichnet,**
**dass** der definierte Abstand (15) periodisch oder beliebig unterbrochen ist, so dass zumindest ein Steg (16) oder zumindest eine Oberflächenstruktur (17) auf der Außenfläche (13) des Füllkörpers (12) und/oder auf der Innenfläche (10) der Hornantenne (7) aneinander angrenzend oder zueinander beabstandet ausgebildet ist.

5. Vorrichtung nach Anspruch 1,2,3 oder 4,
**dadurch gekennzeichnet,**
**dass** in dem definierten Abstand (15) zwischen der Innenfläche (10) der Hornantenne (7) und der Außenfläche (13) des dielektrischen Füllkörpers (12) eine das hochfrequente Messsignal absorbierende Dämpfungsfolie (34) vorgesehen ist.

6. Vorrichtung nach Anspruch 1, 2, 4 oder 5,
**dadurch gekennzeichnet,**
**dass** eine scheibenförmige Verbreiterung (22) auf der dem Prozessraum (5) zugewandten Seite des Füllkörpers (12) als Prozessdichtungselement (23) ausgebildet ist.

7. Vorrichtung nach Anspruch 6,
**dadurch gekennzeichnet,**
**dass** der Formenübergang (21) des Füllkörpers (12) von dem aufgeweiteten Hornbereich (9) auf die scheibenförmige Verbreiterung (22) kontinuierlich abgerundet ausgestaltet ist, um eine Kerbwirkung des Füllkörpers im Bereich des Formenübergangs (21) zu vermeiden.

8. Vorrichtung nach einem der vorangegangenen Ansprüchen,
**dadurch gekennzeichnet,**
**dass** der Füllkörper (12) und/oder die Hornantenne (7, 7a) mehrteilig ausgestaltet sind/ist und/oder diese jeweils aus mehreren unterschiedlichen Materialien ausgebildet sind/ist.

9. Vorrichtung nach einem der vorangegangenen Ansprüchen,
**dadurch gekennzeichnet,**
**dass** der Füllkörper (12) in Abstrahlrichtung eine konvexe, konkave oder kegelförmige Formgebung oder eine Fresnel-Linsenform aufweist.

## Claims

1. Apparatus (1) designed to determine and monitor the level (2) of a medium (3) in a vessel (4) with a time-of-flight method of measurement of high-frequency measuring signals (6), with a horn antenna (7) consisting of a wave guide zone (8) and a widened horn area (9) whose hollow area (11) is at least partially filled by a dielectric filler (12),
wherein a defined distance (15) is formed in the widened horn area (9) between the inner surface (10) of the horn antenna (7) and the outer surface (13) of the dielectric filler (12) for the compensation of the different thermal expansion of the filler (12) and the horn antenna (7),
**characterized in that**
the filler (12) rests on the horn antenna (7) over a certain length (8) on the process side to support and compensate the process pressure forces on the fill body (12) and/or the horn antenna (7), wherein at least one sealing element (19) and/or at least one locking element (20) is introduced between the filler (12) and the horn antenna (7),
wherein a sealing function and a simultaneous locking function of the filler (12) is formed in the horn antenna (7), and wherein the sealing element (19) and/or the looking element (20) is/are arranged in the wave guide zone (8) between the horn antenna (7) and the filler (12).

2. Apparatus as claimed in Claim 1,
**characterized in that**
a gap (14) of 0.2-2 mm is formed between the inner surface (10) of the horn antenna (7) and the outer surface (13) of the dielectric filler (12) by the defined distance (15).

3. Apparatus as claimed in Claim 1 or 2,
**characterized in that**
the defined distance (15) between the inner surface (10) of the horn antenna (7) and the outer surface (13) of the dielectric filler (12) is formed continually.

4. Apparatus as claimed in Claim 1 or 2,
**characterized in that**
the defined distance (15) is interrupted periodically or arbitrarily such that at least one leg (16) or at least one surface structure (17) is formed on the outer surface (13) of the filler (12) and/or on the inner surface (10) of the horn antenna (7) in a manner that they are adjacent to one another or at a distance from one another.

5. Apparatus as claimed in Claim 1, 2, 3 or 4,
**characterized in that**
a damping sheet (34) to absorb the high-frequency measuring signal is provided in the defined distance (15) between the inner surface (10) of the horn antenna (7) and the outer surface (13) of the dielectric filler (12).

6. Apparatus as claimed in Claim 1, 2, 4 or 5,
**characterized in that**
a discoid broadening (22) on the side of the filler (12) facing toward the process chamber (5) is designed as a process sealing element (23).

7. Apparatus as claimed in Claim 6,
**characterized in that**
the transition in shape (21) of the filler (12) from the widened horn area (9) to the discoid broadening (22) is designed in a continually rounded manner to avoid any notching effect of the filler in the area of the transition in shape (21).

8. Apparatus as claimed in one of the previous claims,
**characterized in that**
the filler (12) and/or the horn antenna (7, 7a) is/are designed as consisting of multiple parts and/or is/are made from multiple different materials.

9. Apparatus as claimed in one of the previous claims,
**characterized in that**
the filler (12) has a convex, concave or conical design, or has a Fresnel lens shape, in the angle of emission.

## Revendications

1. Dispositif (1) destiné à la détermination et à la surveillance du niveau (2) d'un produit (3) dans un réservoir (4) au moyen d'une méthode de mesure du temps de propagation de signaux de mesure haute fréquence (6), avec une antenne à cornet (7) constituée d'une zone de guide d'onde (8) et d'une zone de cornet (9) évasée, dont l'espace creux (11) est rempli au moins partiellement avec un corps de remplissage diélectrique (12),
pour lequel est formée, dans la zone de cornet (9) évasée entre la surface intérieure (10) de l'antenne à cornet (7) et la surface extérieure (13) du corps de remplissage diélectrique (12), une distance (15) définie en vue de la compensation de la dilatation thermique divergente du corps de remplissage (12) et de l'antenne à cornet (7),
**caractérisé**
**en ce que** le corps de remplissage (12) repose côté processus sur une longueur (18) déterminée sur l'antenne à cornet (7) en guise de soutien et de compensation des forces de pression de processus exercées sur le corps de remplissage (12) et/ou l'antenne à cornet (7), au moins un élément d'étanchéité (19) et/ou au moins un élément d'arrêt (20) étant inséré entre le corps de remplissage (12) et l'antenne à cornet (7),
**en ce qu'**est constituée une fonction d'étanchéité et une fonction d'arrêt simultanée du corps de remplissage (12) dans l'antenne à cornet (7), et l'élément d'étanchéité (19) et/ou l'élément d'arrêt (20) étant configurés dans la zone de guide d'onde (8) entre l'antenne à cornet (7) et le corps de remplissage (12).

2. Dispositif selon la revendication 1,
**caractérisé**
**en ce qu'**est formée, à travers la distance (15) définie, une fente (14) de 0,2 à 2 mm entre la surface intérieure (10) de l'antenne à cornet (7) et la surface extérieure (13) du corps de remplissage diélectrique (12).

3. Dispositif selon la revendication 1 ou 2,
**caractérisé**
**en ce que** la distance (15) définie entre la surface intérieure (10) de l'antenne à cornet (7) et la surface extérieure (13) du corps de remplissage diélectrique (12) est formée continuellement.

4. Dispositif selon la revendication 1 ou 2,
**caractérisé**
**en ce que** la distance (15) définie est interrompue périodiquement ou à tout moment, de telle sorte à former au minimum un talon ou au minimum une structure superficielle (17) sur la surface extérieure (13) du corps de remplissage (12) et/ou sur la surface intérieure (10) de l'antenne à cornet (7), de manière adjacente ou espacée l'un par rapport à l'autre.

5. Dispositif selon la revendication 1, 2, 3 ou 4,
**caractérisé**
**en ce qu'**est prévue, dans la distance (15) définie entre la surface intérieure (10) de l'antenne à cornet (7) et la surface extérieure (13) du corps de remplissage diélectrique (12), une feuille d'amortissement (34) absorbant le signal de mesure haute fréquence.

6. Dispositif selon la revendication 1, 2, 4 ou 5,
**caractérisé**
**en ce qu'**un élargissement (22) en forme de disque est formé en tant qu'élément d'étanchéité de processus (23) sur le côté du corps de remplissage (12) faisant face à la chambre de processus (5).

7. Dispositif selon la revendication 6,
**caractérisé**
**en ce que** la transition de forme (21) du corps de remplissage (12) est conçue de façon continuellement arrondie entre la zone de cornet évasée (9) et l'élargissement en forme de disque (22), afin d'éviter un effet d'entaille du corps de remplissage dans la zone de la transition de forme (21).

8. Dispositif selon l'une des revendications précédentes,
**caractérisé**
**en ce que** le corps de remplissage (12) et/ou l'antenne à cornet (7, 7a) sont constitués de plusieurs éléments et/ou en ce qu'ils sont constitués de plusieurs matériaux différents.

9. Dispositif selon l'une des revendications précédentes,
**caractérisé**
**en ce que** le corps de remplissage (12) présente dans la direction de rayonnement une forme convexe, concave ou conique, ou une forme de lentille de Fresnel.
